# EUROPÄISCHE PATENTANMELDUNG

(11) **EP 1 217 476 A2**
(43) Veröffentlichungstag der Anmeldung: **26.06.2002**
(21) Anmeldenummer: 01129975.7
(22) Anmeldetag: 17.12.2001
(51) Int. Cl.: G05B 19/042

(54) **Vorrichtung und Verfahren zur Inbetriebnahme und Diagnose von Steuerungssystemen**

(30) Priorität: 22.12.2000 DE 10064798; 23.05.2001 DE 10125384
(71) Anmelder: SIEMENS AKTIENGESELLSCHAFT, 80333 München (DE)
(72) Erfinder: Bungert, Ulrich, 90547 Stein (DE); Kiesel, Martin, 91099 Paxdorf (DE)

(57) **Zusammenfassung**

Das Engineering von Automatisierungssystemen soll einfacher gestaltet werden. Daher wird die Funktionalität des Steuerungssystems über ein Objektmodell realisiert. Das Objektmodell ermöglicht das funktionelle Zusammenschalten von Technologieobjekten. Ein Projektbrowser gewährleistet hierfür die Darstellung des Zusammenspiels aller an einer Applikation beteiligten Komponenten in ihren wechselseitigen Beziehungen.

## Beschreibung

Die vorliegende Erfindung betrifft eine Vorrichtung und Verfahren zur Inbetriebnahme und Diagnose von Steuerungssystemen. Insbesondere betrifft die vorliegende Erfindung eine Vorrichtung mit einem Engineeringsystem zur Erstellung eines Steuerungsprogramms.

Die Inbetriebnahme, das Betreiben und die Diagnose von Automatisierungssystemen und Antrieben erfolgt zunehmend vollkommen elektronisch. Mechanische Systeme und Antriebe von Automaten werden über Mikrokontroller mit einer entsprechenden Software (Runtimesysteme) gesteuert. Die entsprechenden Steuerungsprogramme werden in einem sogenannten Engineeringsystem auf einem PC entwickelt und anschließend in das Runtimesystem geladen, das für die Zeitsteuerung des zu steuernden Systems verantwortlich ist. Das Engineeringsystem dient auch zur Inbetriebnahme, Projektierung, Parametrierung von Steuerungen und Antrieben.

Die zunehmende Komplexität von Automaten erfordert ebenfalls komplexere Steuersysteme und damit komplexere Steuerungsprogramme. Bisherige Engineering-Tools stellen rudimentär Informationen bereit, die dem Anwender in Form von Einzelinformationen geliefert werden. Die Datenaufbereitung erfolgt in der Regel manuell.

Die Aufgabe der vorliegenden Erfindung besteht somit darin, dem Anwender eine möglichst intuitive und einfache Möglichkeit zu bieten, die Zustände der Steuerung und das Ablaufverhalten zu beobachten und zu optimieren.

Erfindungsgemäß wird diese Aufgabe gelöst durch eine Vorrichtung zur Inbetriebnahme und/oder Diagnose von Steuerungssystemen mit einer Darstellungseinrichtung zur Darstellung der Funktionalität des Steuerungssystems über ein Objektmodell, und einem Engineeringsystem zur Erstellung eines Steuerungsprogramms auf der Basis der über das Objektmodell dargestellten Funktionalität des Steuerungssystems.

Darüber hinaus lässt sich die genannte Aufgabe durch ein entsprechendes Verfahren lösen.

Vorteilhafte Weiterbildungen des erfindungsgemäßen Verfahrens und der erfindungsgemäßen Vorrichtung sind in den Unteransprüchen definiert.

Als besonders vorteilhaft erweist sich, dass das erfindungsgemäße Verfahren eine skalierte und schrittweise Inbetriebnahme und Diagnose ermöglicht.

Die vorliegende Erfindung wird nun anhand der beigefügten Zeichnungen näher erläutert, in denen zeigen:
Fig. 1 ein Diagramm des erfindungsgemäßen Objektmodells;
Fig. 2 eine Ausgestaltung eines konkreten Steuerprojekts;
Fig. 3 ein Beispiel eines Projektbrowsers und Instanzen von wesentlichen Objekttypen;

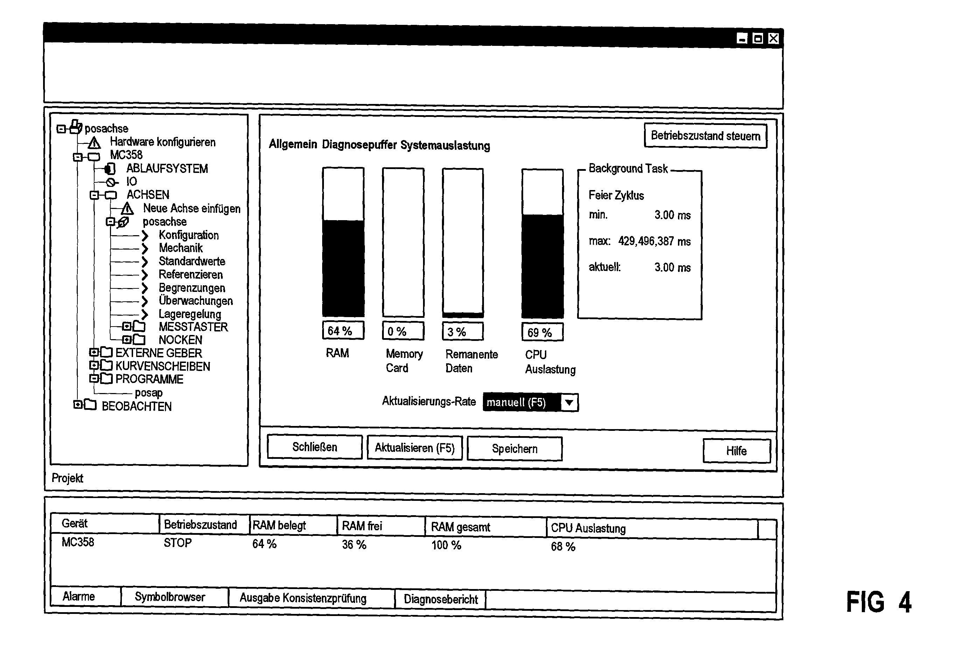

Fig. 4 eine detaillierte Darstellung von Geräteinformationen; und
Fig. 5 eine Darstellung einer Funktion zur Online-Beobachtung eines Anwenderprogramms auf der Objektebene "Programm".

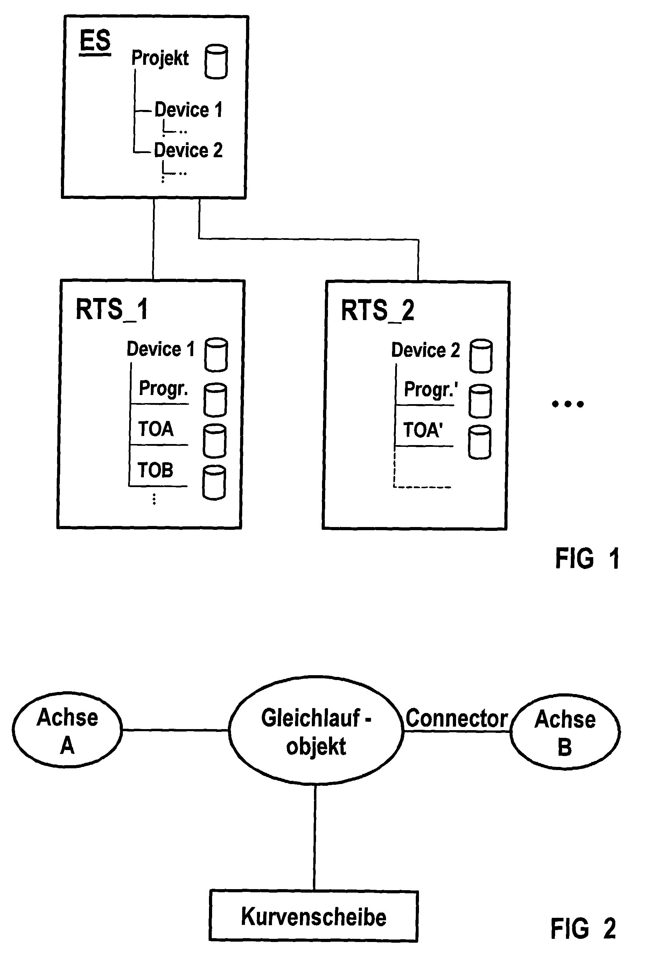

Das folgende Ausführungsbeispiel dient zur näheren Erläuterung der vorliegenden Erfindung. Fig. 1 stellt schematisch ein Steuersystem für die Automatisierung dar. Dieses Steuersystem umfasst ein Engineeringsystem ES mit dem ein Steuerungsprogramm erstellt werden kann. Darüber hinaus umfasst das Steuerungssystem ein oder mehrere Runtimesysteme RTS.

In dem Engineeringsystem ES wird ein Steuerungsprogramm entwickelt, das auf einem Objektmodell basiert. Das Objektmodell enthält Technologieobjekte, wie z. B. Positionierachsen, Gleichlaufachsen, Kurvenscheiben, etc., welche gemäß ihrer Funktionalität mit anderen Technologieobjekten oder auch untereinander verschaltbar sind. Mit einem oder mehreren verschalteten Technologieobjekten TOA, TOB, etc. lässt sich zusammen mit einem entsprechenden Programm die Steuerung eines Geräts Device 1, Device 2, etc. formulieren.

Fig. 1 zeigt, dass mit Hilfe des Engineeringsystems ES innerhalb eines Projekts für mehrere Runtimesysteme RTS_1, RTS_2 unterschiedliche Gerätesteuerungen Device 1, Device 2 realisiert werden können. Somit lassen sich unterschiedliche Steuerungsfunktionalitäten über das Objektmodell umsetzen. Das Objektmodell hat Wirkung im Engineeringsystem und/oder Runtimesystem und ist Basis für das Engineering der Steuerung. Dies bedeutet, dass die Inbetriebnahme, die Programmierung, die Diagnose usw. auf der Grundlage des Objektmodells durchführbar ist.

Die im Objektmodell verwendeten Objekte lassen sich in unterschiedliche Objekttypen kategorisieren. Derartige Objekttypen sind beispielsweise:
- "Projekt", das als Container für Engineeringdaten eines Anwenderprojekts dient
- "Device", das ein Gerät beispielsweise eine Steuerung, repräsentiert
- "Programm", das als Container für die Verwaltung und Ablage von Anwenderprogrammen dient
- "Technologieobjekt", das einer Positionierachse, einer Gleichlaufachse, einem Messtaster, einer Kurvenscheibe, etc. entspricht
- "Antriebsobjekt", das einen oder mehrere in der Steuerung verwendeten Antriebe repräsentiert

Fig. 2 zeigt beispielhaft die konkrete Ausgestaltung bzw. Instanzierung für die Steuerung eines Geräts mit zwei Achsen A und B. Die Übersetzung zwischen der Achse A und der Achse B wird durch ein Gleichlaufobjekt gesteuert. Mit einer Kurvenscheibe ist beispielsweise die Übersetzung des Gleichlaufobjekts variierbar. Die einzelnen Objekte Achse A, Gleichlaufobjekt, Achse B und Kurvenscheibe sind durch Konnektoren verbunden, die den jeweiligen funktionellen Zusammenhang repräsentieren. Mit Hilfe des Objektmodells lässt sich somit der Antrieb der Achsen A und B realisieren.

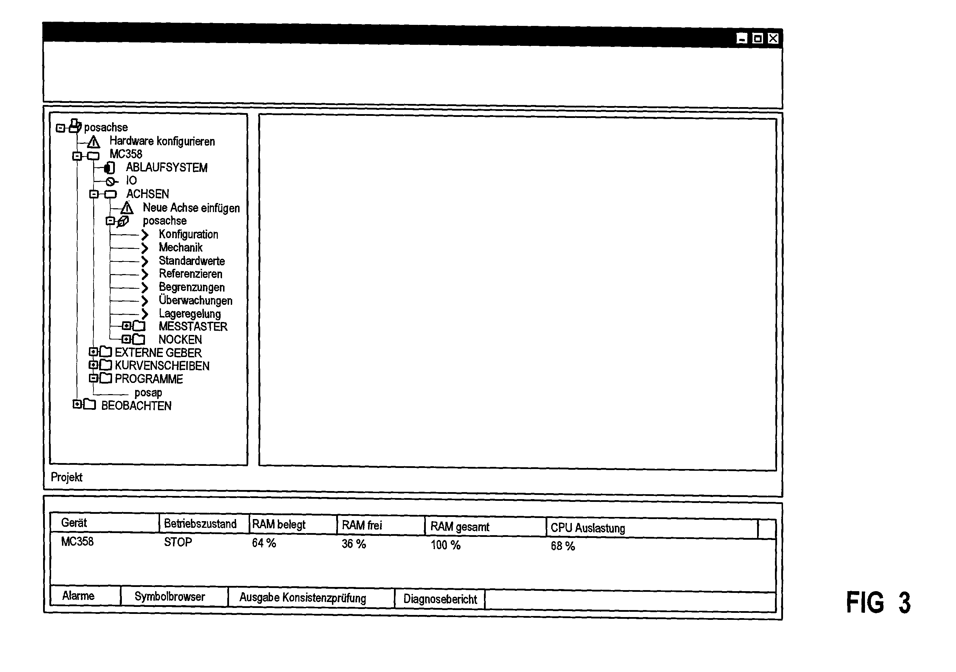

Die einzelnen Objekte und deren funktionelle Verbindungen müssen insbesondere für die Entwicklung von Steuerungsprojekten visualisiert werden. Dazu dient der in Fig. 3 dargestellte Projektbrowser, der Instanzen von wesentlichen Objekttypen zeigt. Im vorliegenden Fall wird auf der Ebene "device" zu dem Gerät "MC 358" Informationen über den Betriebszustand, die Speicherbelegung und die CPU-Auslastung dargeboten. Navigiert der Benutzer mit Hilfe des Projektbrowsers zu anderen Objekten, so werden deren Informationen im jeweiligen Sichtfenster dargestellt. Durch diesen Projektbrowser im Engineeringsystem lassen sich somit komplexere Steuerungen übersichtlich und bedarfsgerecht zusammenstellen.

Erfindungsgemäß wird in dem Projektbrowser das Zusammenspiel aller an einer Applikation beteiligten Komponenten dargestellt. Damit ist ein Gesamtüberblick über die in der Maschine ablaufenden Vorgänge gewährleistet und der Anwender wird in die Lage versetzt, die in jedem Inbetriebnahmeschritt erforderliche Informationstiefe abzurufen. Insbesondere in verteilten System ist ein Zugriff auf alle notwendigen Informationen sowie der Überblick über das Zusammenspiel von verteilten Funktionen notwendig, um eine Systemoptimierung durchführen zu können.

Die Handhabbarkeit bzw. Usability des Systems wird durch die stufenweise angebotenen Informationen und durch die Möglichkeit der Eingriffsname entscheidend verbessert. Der Anwender erhält je nach gewählter Instanztiefe unterschiedliche Informationen bzw. Möglichkeiten, Parameter zu ändern. Es ist somit nicht mehr notwendig, sich aus einer Vielzahl von Systemparametern ein paar wenige auszusuchen, durch die eine bestimmte Funktionalität geändert werden soll. Vielmehr werden die einzelnen Parameter durch Objekte bzw. Funktionalitäten gebündelt und dem Anwender in dieser gebündelten Form präsentiert.

Weiterhin bietet dieses Konzept der stufenweisen Informationsdarbietung direkte Anknüpfungspunkte zur automatisierten Optimierung des Maschinenablaufs. Das Ziel, möglichst eine Inbetriebnahme ohne Dokumentation durchzuführen, wird dadurch nahezu erreicht. Ferner bietet eine Systemoptimierung bzgl. Performance und effizienter Speicherausnutzung eine wesentliche Entscheidungsgrundlage für den Anwender.

Fig. 2 zeigt in diesem Zusammenhang eine Möglichkeit Geräteinformationen detaillierter darzustellen. Im konkreten Beispiel wird die Speicherbelegung und die Systemauslastung des "MC 358" im Detail dargestellt. Derartige Detailinformationen können für bestimmte Optimierungsschritte hilfreich sein.

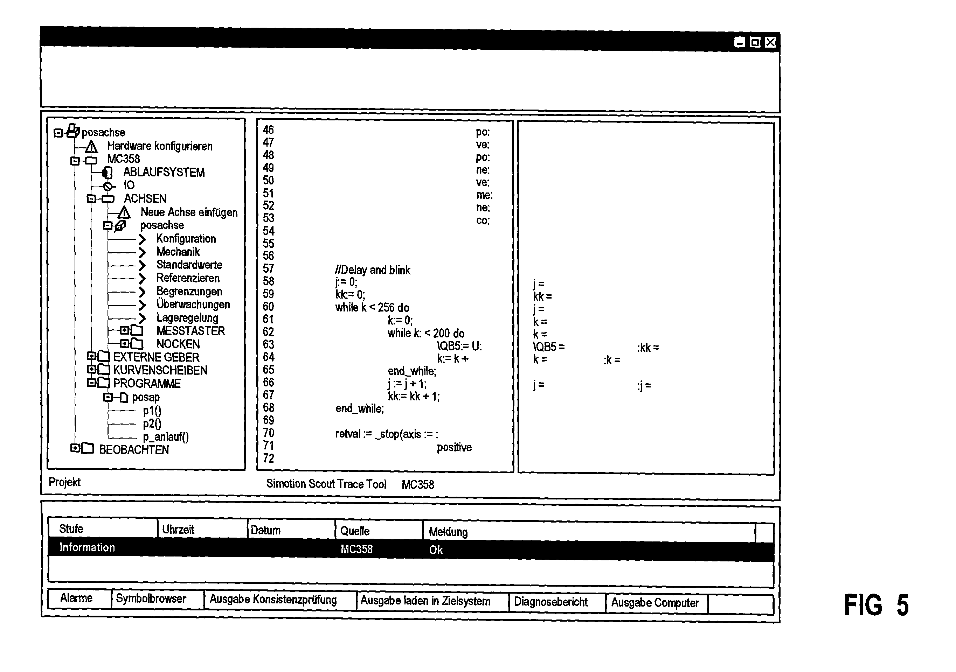

Fig. 5 zeigt schließlich auf der Objektebene "Programm" eine Funktion zur Online-Beobachtung eines Anwenderprogramms. Dieses Tool dient für den Test von Anwenderprogrammen. In diesem Kontext wird ein direkter Zugang zu weiteren relevanten Tools wie "Simotion Scout Trace Tool" bereitgestellt, die es einem Anwender ermöglichen, schnell in die jeweils relevanten Tools umzuschalten. Das Trace-Tool bietet in diesem Fall die Möglichkeit, Signale der Steuerung aufzuzeichnen. Der aufgezeichnete Daten- bzw. Kurvenverlauf dient wiederum zur Optimierung des Steuerungssystems bzw. zur Unterstützung der Inbetriebnahme der Steuerung oder deren Diagnose.

Das erfindungsgemäße System weist somit folgende Vorteile auf:
- die Funktionalität der Steuerung ist über ein Objektmodell repräsentiert
- das Objektmodell hat Wirkung im Engineeringsystem und/oder Runtimesystem
- das Objektmodell ist Basis für das Engineering der Steuerung (für z. B. Inbetriebnahme, Programmierung, ..)
- das Objektmodell ist Basis für die Datenhaltung der Steuerung
- die Instanzen der Steuerungsobjekte werden im Engineeringsystem über einen Projektbrowser visualisiert
- das Engineeringsystem bietet basierend auf den Instanzen der Steuerungsobjekte einen gestuften Zugang zu Diagnoseinformationen und Inbetriebnahmetools
- der Projektbrowser visualisiert 1 bis n Steuerungsgeräte und die vernetzten Antriebe und weitere Feldgeräte
- Beziehungen zwischen Objektinstanzen werden im Projektbrowser visualisiert (z. B. Link zwischen Positionierachse und Antrieb)
- durch Navigieren im Projektbrowser werden jeweils kontextsensitiv Informationen visualisiert
- durch Navigieren im Projektbrowser werden jeweils kontextsensitiv relevante Tools angeboten.

Darüber hinaus sind folgende Vorteile besonders hervorzuheben:
- die Steuerung kann über Online und Offline Datenhaltung verfügen (Online: Ablage im Runtimesystem, Offline: Ablage im Engineeringsystem)
- beim Umschalten auf Online-Betrieb (Verbindungsaufbau zwischen Engineeringsystem und Runtimesystem) wird die Datenkonsistenz zwischen Online- und Offline-Datenhaltung geprüft und Inkonsistenzen werden im Projektbrowser visualisiert.

Das oben beschriebene erfindungsgemäße System bzw. verfahren lässt sich als Computerprogramm in dafür bekannten Sprachen implementieren. Ein derartig implementiertes Computerprogramm kann in ebenfalls bekannter Weise über elektronische Datenwege, aber auch auf Datenträgern abgespeichert und transportiert werden.

## Patentansprüche

1. Vorrichtung zur Inbetriebnahme und/oder Diagnose von Steuerungssystemen mit
einer Darstellungseinrichtung zur Darstellung der Funktionalität des Steuerungssystems über ein Objektmodell, und
einem Engineeringsystem zur Inbetriebnahme, Projektierung, Parametrierung von Steuerungen und Antrieben und/oder zur Erstellung eines Steuerungsprogramms auf der Basis der über das Objektmodell dargestellten Funktionalität des Steuerungssystems.

2. Vorrichtung nach Anspruch 1, wobei die Daten für die Steuerung auf der Basis des Objektmodells verwaltet werden.

3. Vorrichtung nach einem der Ansprüche 1 und 2, wobei durch das Engineeringsystem basierend auf Instanzen von Steuerungsobjekten ein gestufter Zugang zu Diagnoseinformationen und Inbetriebnahmetools realisierbar ist.

4. Vorrichtung nach einem der Ansprüche 1 bis 3, wobei Instanzen von Steuerungsobjekten, insbesondere Steuerungsgeräte und vernetzte Antriebe, und/oder deren gegenseitige Beziehungen in dem Engineeringsystem über einen Projektbrowser visualisierbar sind.

5. Vorrichtung nach Anspruch 4, wobei beim Navigieren im Projektbrowser jeweils kontextsensitiv Informationen visualisierbar und relevante Tools ausführbar sind.

6. Vorrichtung nach einem der Ansprüche 1 bis 5, wobei die Datenhaltung online, insbesondere in einem Runtimesystem, oder offline, insbesondere in dem Engineeringsystem, durchführbar ist.

7. Vorrichtung nach Anspruch 6, wobei die Datenkonsistenz zwischen Offline- und Online-Datenhaltung in dem Projektbrowser insbesondere gestuft visualisierbar ist.

8. Verfahren zur Inbetriebnahme und/oder Diagnose von Steuerungssystemen mit den Schritten
Darstellen der Funktionalität des Steuerungssystems in einem Objektmodell, und
Inbetriebnahme, Projektierung, Parametrierung von Steuerungen und Antrieben und/oder Erstellen eines Steuerungsprogramms auf der Basis der über das Objektmodell dargestellten Funktionalität des Steuerungssystems.

9. Verfahren nach Anspruch 8, wobei die Daten für die Steuerung auf der Basis des Objektmodells verwaltet werden.

10. Verfahren nach einem der Ansprüche 8 und 9, wobei basierend auf Instanzen von Steuerungsobjekten ein gestufter Zugang zu Diagnoseinformationen und Inbetriebnahmetools realisiert wird.

11. Verfahren nach einem der Ansprüche 8 bis 10, wobei Instanzen von Steuerungsobjekten, insbesondere Steuerungsgeräte und vernetzte Antriebe, und/oder deren gegenseitige Beziehungen über einen Projektbrowser visualisiert werden.

12. Verfahren nach Anspruch 11, wobei beim Navigieren im Projektbrowser jeweils kontextsensitiv Informationen visualisiert und relevante Tools dargeboten werden.

13. Verfahren nach einem der Ansprüche 8 bis 12, wobei die Datenhaltung online, insbesondere in einem Runtimesystem, oder offline, insbesondere in einem Engineeringsystem, erfolgt.

14. Verfahren nach Anspruch 13, wobei die Datenkonsistenz zwischen Offline- und Online-Datenhaltung in dem Projektbrowser visualisiert wird.

15. Computerprogramm, das eine Vorrichtung nach einem der Ansprüche 1 bis 7 implementiert.

16. Datenträger, auf dem ein Computerprogramm nach Anspruch 15 gespeichert ist.

17. Datenverarbeitungseinrichtung, auf der ein Computerprogramm nach Anspruch 15 installiert ist.
